(19) Europäisches Patentamt
European Patent Office
Office européen des brevets

(11) **EP 4 239 263 A1**

(12) **EUROPEAN PATENT APPLICATION**

(43) Date of publication:
06.09.2023 Bulletin 2023/36

(51) International Patent Classification (IPC):
*F25C 5/187* (2018.01)          *F25B 49/00* (2006.01)
*F25D 29/00* (2006.01)          *H04L 12/28* (2006.01)

(21) Application number: 23159689.1

(22) Date of filing: 02.03.2023

(52) Cooperative Patent Classification (CPC):
**F25D 29/008; F25B 49/005; F25C 5/187;**
**H04L 12/2823;** F25B 2600/07; F25C 2400/06;
H04L 2012/285

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 04.03.2022 US 202217686986

(71) Applicant: **True Manufacturing Co., Inc.**
O'Fallon, Missouri 63366 (US)

(72) Inventor: **KNATT, Kevin**
O'Fallon, 63366 (US)

(74) Representative: **Forrest, Stuart**
**WP Thompson**
**138 Fetter Lane**
**London EC4A 1BT (GB)**

(54) **SYSTEMS AND METHODS FOR MONITORING REFRIGERATION APPLIANCES**

(57) Systems and methods for monitoring refrigeration appliances remotely take corrective action to address failure to maintain recurrent maintenance schedules by either pushing a notification to an operator or sending a command to cause a controller (160) of the appliance (103) to switch to a restricted mode. The systems and methods can use periodic indications of ice level from an ice level sensor (141) to determine that the level of ice in the bin is low, and in response, to either push a low ice notification to an operator or place an order for additional ice. The systems and methods can also collect ice level data from many ice makers (103), determine which have a low ice level and which have a high ice level, and in response, facilitate a web based transaction by which one operator acquires ice from another.

101

**FIG. 1**

EP 4 239 263 A1

**Description**

FIELD

The present disclosure generally pertains to systems and methods for monitoring refrigeration appliances such as ice makers.

BACKGROUND

Appliances, including refrigeration appliances such as commercial and residential refrigerators, freezers, and ice makers are in wide use. Many modern appliances are able to connect to the internet. While network-connected appliances are known, the industry has not recognized all of the possibilities that network connection affords.

SUMMARY

In one aspect, a method of remotely managing an appliance comprises receiving operating data from the appliance. Based on the operating data, an interval of elapsed time since a recurrent maintenance task was performed is determined. An asset management server remote from the appliance recognizes that the interval of elapsed time exceeds a threshold time interval. In response to recognizing that the interval of time exceeds the threshold time interval, the asset management server one of: (i) pushes a notification to an operator of the appliance indicating that the recurrent maintenance task should be performed and (ii) sends a command to the appliance over the client-server network, the command being configured to cause a controller of the appliance to switch from a normal mode to a restricted mode.

In another aspect, a method of managing an ice maker comprises receiving periodic indications of a level of ice in a bin associated with the ice maker from an ice level sensor of the ice maker. Based on the periodic indications, it is determined that the level of ice in the bin is low. In response to said determining, at least one corrective action selected from the group of corrective actions consisting of (i) pushing a low ice notification to an operator of the ice maker and (ii) placing an order for additional ice is taken.

In another aspect, a method of remotely managing a plurality of ice makers in an asset management system comprises receiving at an asset management server ice level data from the plurality of ice makers. The asset management server determines based on the ice level data that a first of the plurality of ice makers has a low ice level and a second of the plurality of ice makers has high ice level. In response to said determining, the asset management server facilitates a web based transaction by which the operator of the first ice maker purchases ice from the operator of the second ice maker.

Other aspects will be in part apparent and in part pointed out hereinafter.

BRIEF DESCRIPTION OF THE DRAWINGS

FIG. 1 is a schematic block diagram of an asset management system for managing a plurality of appliances;
FIG. 2 is a schematic illustration of an ice maker that can be used with the asset management system of FIG. 1;
FIG. 3 is a schematic block diagram of a control system of the ice maker of FIG. 2;
FIG. 4 is a schematic illustration of the ice maker showing an ice level sensor thereof;
FIG. 5 is a flow chart of the steps and decision points of one embodiment of a method of addressing ice maker capacity;
FIG. 6 is a flow chart of the steps and decision points of another embodiment of a method of addressing ice maker capacity;
FIG. 7 is a flow chart of the steps and decision points of another embodiment of a method of addressing ice maker capacity;
FIG. 8 is a flow chart of the steps and decision points of a method of remotely promoting compliance with recurrent maintenance requirements of an appliance.

Corresponding reference characters indicate corresponding parts throughout the drawings.

DETAILED DESCRIPTION

The present disclosure pertains to systems and methods for monitoring refrigeration appliances. Exemplary embodiments pertain to systems and methods of remotely monitoring commercial ice makers. In particular, certain aspects of the disclosure pertain to systems and methods for remotely monitoring ice level data of ice makers in an asset management system and utilizing the ice level data to take corrective action before the ice maker fails to meet demand for ice. The disclosure also pertains to systems and methods that utilize a remote asset management system for appliances to promote compliance with recurrent maintenance obligations.

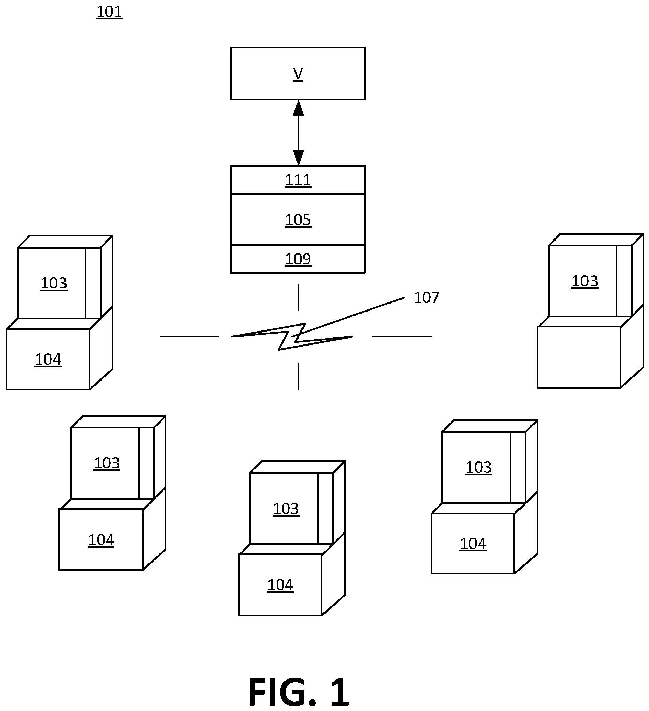

Referring to FIG. 1, an exemplary system for managing refrigeration appliances (broadly, a system for managing appliances) is generally indicated at reference number 101. The system broadly includes a plurality of refrigeration appliances 103 (each, broadly, an appliance). A client-server network 107 (e.g., the internet) connects each of the refrigeration appliances 103 to an asset management server 105. The illustrated asset management server 105 is configured to selectively send commands to the refrigeration appliances 103 connected to the server by the network 107. Commands can be configured to change local control parameters on the appliances 103 and thereby adjust the way the appliances operate. In addition, the refrigeration appliances 103 are configured to send operating data to the asset management server 105, which the asset management server stores in memory 109. Thus, it can be seen that the network 107 facilitates interaction between the asset management server 105 and the appliances 103. As will be explained more fully below, when operating data indicates that required maintenance tasks have not been performed on one of the appliances 103, the asset management server 105 is configured to take action to ensure the task is completed. In the illustrated embodiment, the appliances 103 comprise ice makers and the operating data sent to the asset management server 105 comprises ice level data, and in certain embodiments, ice production data. As explained in further detail below, the asset management server 105 is configured to monitor the ice level and take corrective action when ice level is too low to meet expected demand. In the illustrated embodiment, the asset management server 105 comprises an application programming interface (API) 111 through which the asset management server is configured to connect to one or more web-based ice vendor platforms V that sells ice for delivery. As explained more fully below, in certain embodiments, the asset management server 105 is configured to enact automated purchase transactions on behalf of the ice maker operator to purchase ice from the vendor website V the when the ice level is too low. Additionally, as will be explained in further detail below, the asset management server 105 can broker an "automated IOT-based peer-to-peer ice marketplace" between ice makers 103 on the network, whereby the asset management server 105 can make a request on behalf of an operator of an ice maker on the network that has a low ice level to purchase or make unpaid acquisitions of ice from the operator of a nearby operator on the network that has a high ice level.

It will be understood that the "asset management server" could be a dedicated server system at a single location or distributed computing resources (e.g., a cloud-based system) capable of running the asset management application (e.g., an SAAS application) and communicating with the refrigeration appliances 103 over the client-server network 107. In certain embodiments, the refrigeration appliances 103 are registered to the asset management server 105 to gain membership in the network-connected asset management system 101. Through the registration process or any other suitable way, the asset management server 105 can store in memory 109 address information for each of the appliances 103 by which the asset management server 105 can address commands to particular appliances and determine which of the appliances is the source of operating data as it is received. In some cases, the ice maker operator can also provide information about the geographic location (e.g., street address) of the ice maker 103 during the registration process, which the server 105 stores in the memory 109. Further, the registration process can involve input of payment credentials (e.g., credit card information) and/or deposit account credentials for the ice maker operator, which the server 105 stores in memory 109. If the asset management system 101 includes the API 111 for purchasing ice from one or more ice vendor platforms V, the asset management system 105 can use the location information to select one or more ice vendor platforms V from which to purchase ice based on estimated delivery time to the location of the ice maker. Furthermore, in one or more embodiments, the ice maker operator can opt into the automated IOT-based peer-to-peer ice marketplace during the registration process. If the asset management system 101 is configured to provide an automated IOT-based peer-to-peer ice marketplace, the asset management server 105 can use the registered location stored in memory 109 to determine which other ice makers within the network that have opted into the automated IOT-based peer-to-peer ice marketplace are located nearby. In one or more embodiments, the ice maker operator selects an acceptable geographic area from which to make peer-to-peer ice purchases (e.g., a radius from the ice maker location) using the automated IOT-based peer-to-peer ice marketplace. Still further, the ice maker can provide contact information during the registration process (e.g., cell phone numbers and/or email addresses) that the server 105 stores in the memory 109. In certain embodiments, the server 105 uses the stored contact information to push notifications to the operators using their registered points of contact. It will also be understood that the registration process can be facilitated on a mobile device application so that notifications can be pushed via the mobile device application instead of or in addition to pushing notifications to phone numbers or email addresses.

In an exemplary embodiment, each of the refrigeration appliances 103 is a commercial ice maker. An exemplary embodiment of a commercial ice maker as shown herein is described more fully in U.S. Patent Application No. 17/147,965, filed January 13, 2021, and entitled ICE MAKER, which is hereby incorporated by reference in its entirety. It will be understood that the system 101 can include other types of refrigeration appliances, such as commercial refrigerators, commercial freezers, and residential refrigeration appliances. In general, "refrigeration appliances" in the scope of this disclosure comprise a refrigeration system (e.g., a vapor-compression system, thermoelectric system, and/or other suitable refrigeration system) that is configured to cool a particular area associated with the appliance. In the case of the ice makers 103, each refrigeration system is configured to cool an ice formation device where water collects and is chilled to freeze into collectable ice. In the case of many other types of refrigeration appliances, the refrigeration system will cool a defined storage area, such as the space inside a reach-in cabinet, display cabinet, drawer, walk-in compartment, etc. Refrigeration appliances in the scope of this disclosure also include local controllers for operating the refrigeration appliance and/or receiving operating data from various components of the appliance.

Although this disclosure specifically details use of the asset management system 101 with refrigeration appliances, the principles of using the asset management system for monitoring compliance with recurrent maintenance obligations may be applied to other types of appliances (e.g., kitchen appliances, cooking appliances, cleaning appliances (e.g., sterilization appliances), water-using appliances, and medical appliances or devices) without departing from the scope of the disclosure. Other appliances in the scope of this disclosure will typically comprise an electronic local control system that includes one or more electronically controllable parts which carry out one or more appliance functions, one or more components that output a signal representing a real-time indication of how one or more aspects of the appliance is operating or performing, and a local controller for operating the controllable parts and/or receiving operating data from the signal outputting components of the appliance. Furthermore, appliances in the scope of this disclosure will typically comprises a network interface or port (e.g., a cellular data antenna or Wi-Fi antenna) that enables the appliances to connect to the asset management system network 107 and communicate with the remote asset management system server 105.

In many cases, local control systems of appliances (e.g., refrigeration appliances) in the scope of this disclosure will be configured to selectively operate the appliance in at least a normal mode and a restricted mode. In the restricted mode, one or more capabilities of the normal mode are made unavailable. Various ways of implementing the switchover between a normal mode and a restricted mode fall within the scope of this disclosure. For instance, in one or more embodiments, the local controller can access control parameters from a local memory which includes registers that define the available operating modes. As a further example, the memory may have binary registers for each of the normal and restricted modes of the appliance. In exemplary embodiments, the asset management server can issue "change control parameter commands" to the appliance that write new values into these registers and/or other registers for control parameters of the appliance.

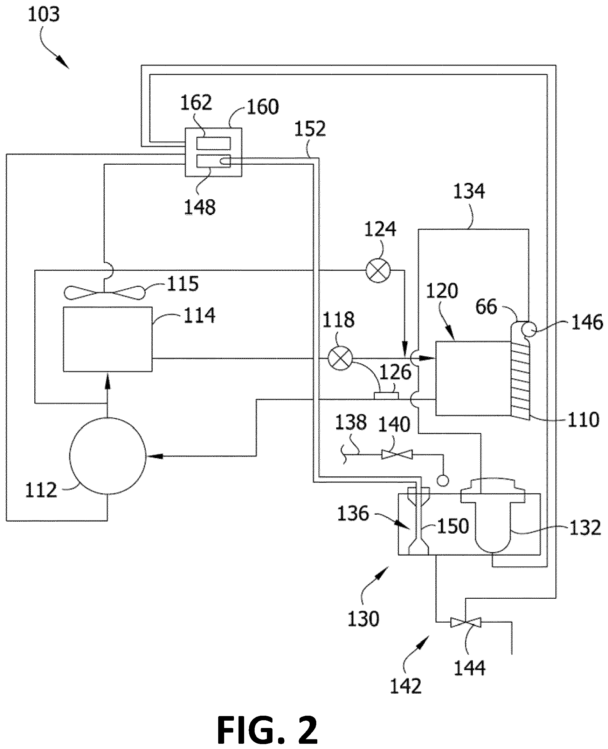

Referring to FIG. 2, an exemplary embodiment of an ice maker 103 that may be used in the asset management system 101 will now be briefly described. Ice makers in the scope of this disclosure may broadly comprise an ice formation device on which water can form into pieces of ice, a water system for directing water onto the ice formation device, and a refrigeration system configured to cool the ice formation device to a temperature at which at least some of the liquid water present on the ice formation device will freeze into ice. In the illustrated embodiment, the ice maker is a batch ice maker of the type which has a generally vertically oriented freeze plate 110 that constitutes the ice formation device. Other types of ice makers such as nugget ice makers and vertical spray ice makers are also contemplated to be in the scope of this disclosure. In a nugget ice maker, the ice formation device is typically a chilled cylinder disposed inside an auger; and in a vertical spray ice maker, the ice formation device is typically a horizontally oriented freeze plate in which ice piece molds open downward.

The refrigeration system of the ice maker 103 includes a compressor 112, a heat rejecting heat exchanger 114, a refrigerant expansion device 118 for lowering the temperature and pressure of the refrigerant, an evaporator 120 along the back side of the freeze plate 110, and a hot gas valve 124. The compressor 112 can be a fixed speed compressor or a variable speed compressor to provide a broader range of control possibilities. As shown, the heat rejecting heat exchanger 114 may comprise a condenser for condensing compressed refrigerant vapor discharged from the compressor 112. In other embodiments, e.g., in refrigeration systems that utilize carbon dioxide refrigerants where the heat of rejection is trans-critical, the heat rejecting heat exchanger is able to reject heat from the refrigerant without condensing the refrigerant. Hot gas valve 124 is selectively opened to direct warm refrigerant from the compressor 114 directly to the evaporator 120 to remove or harvest ice cubes from the freeze plate 110 when the ice has reached the desired thickness.

The refrigerant expansion device 118 can be of any suitable type, including a capillary tube, a thermostatic expansion valve, or an electronic expansion valve. In certain embodiments, where the refrigerant expansion device 118 is a thermostatic expansion valve or an electronic expansion valve, the ice maker 110 may also include a temperature sensor 126 placed at the outlet of the evaporator 120 to control the refrigerant expansion device 118. In other embodiments, where the refrigerant expansion device 118 is an electronic expansion valve, the ice maker 110 may also include a pressure sensor (not shown) placed at the outlet of the evaporator 120 to control the refrigerant expansion device 118 as is known in the art. In certain embodiments that utilize a gaseous cooling medium (e.g., air) to provide condenser cooling, a condenser fan 115 may be positioned to blow the gaseous cooling medium across the condenser 114. The condenser fan 115 can be a fixed speed fan or a variable speed fan to provide a broader range of control possibilities. The compressor 112 cycles a form of refrigerant through the condenser 114, expansion device 118, evaporator 120, and the hot gas valve 124, via refrigerant lines.

Referring still to FIG. 2, a water system of the illustrated ice maker 10 includes a sump 130, a water pump 132, a water line 134 (broadly, passaging), and a water level sensor 136. The water pump 132 could be a fixed speed pump or a variable speed pump to provide a broader range of control possibilities. The water system of the ice maker 103 further includes a water supply line 138 and a water inlet valve 140 for filling the sump 130 with water from a water source (e.g., a municipal water utility). The illustrated water system further includes a drain line 142 (also called, drain passaging or a discharge line) and a drain valve 144 (e.g., purge valve, drain valve; broadly, a purge device) disposed thereon for draining water from the sump 130. The sump 130 may be positioned below the freeze plate 110 to catch water coming off of the freeze plate such that the relatively cool water falling from the freeze plate may be recirculated by the water pump 132. The water line 134 fluidly connects the water pump 132 to a water distributor 146 above the freeze plate. During an ice batch production cycle, the pump 132 is configured to pump water through the water line 134 and through the distributor 146. The distributor is configured to distribute the water imparted through the distributor 146 evenly across the front of the freeze plate 110 so that the water flows downward along the freeze plate and any unfrozen water falls off of the bottom of the freeze plate into the sump 130.

In an exemplary embodiment, the water level sensor 136 comprises a remote air pressure sensor 148. It will be understood, however, that any type of water level sensor may be used in the ice maker 103 including, but not limited to, a float sensor, an acoustic sensor, or an electrical continuity sensor. The illustrated water level sensor 136 includes a fitting 150 that is configured to couple the sensor to the sump 130. The fitting 150 is fluidly connected to a pneumatic tube 152. The pneumatic tube 152 provides fluid communication between the fitting 150 and the air pressure sensor 148. Water in the sump 130 traps air in the fitting 150 and compresses the air by an amount that varies with the level of the water in the sump. Thus, the water level in the sump 130 can be determined using the pressure detected by the air pressure sensor 148. Additional details of exemplary embodiments of a water level sensor comprising a remote air pressure sensor are described in U.S. Patent Application Publication No. 2016/0054043, which is hereby incorporated by reference in its entirety.

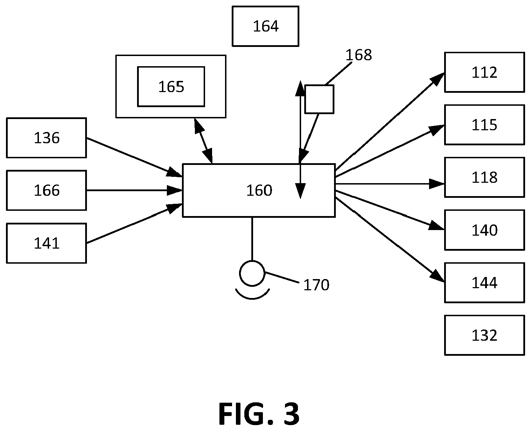

Referring to FIGS. 2 and 3, the ice maker 103 includes a controller 160 (e.g., a "local controller" or an "appliance controller"). The controller 160 includes at least one processor 162 for controlling the operation of the ice maker 103, e.g., for controlling at least one of the refrigeration system and the water system. The processor 162 of the controller 160 may include a non-transitory processor-readable medium storing code representing instructions to cause the processor to perform a process. The processor 162 may be, for example, a commercially available microprocessor, an application-specific integrated circuit (ASIC) or a combination of ASICs, which are designed to achieve one or more specific functions, or enable one or more specific devices or applications. In certain embodiments, the controller 160 maybe an analog or digital circuit, or a combination of multiple circuits. The controller 160 may also include one or more memory components 164 (FIG. 3) for storing data in a form retrievable by the controller. The controller 160 can store data in or retrieve data from the one or more memory components.

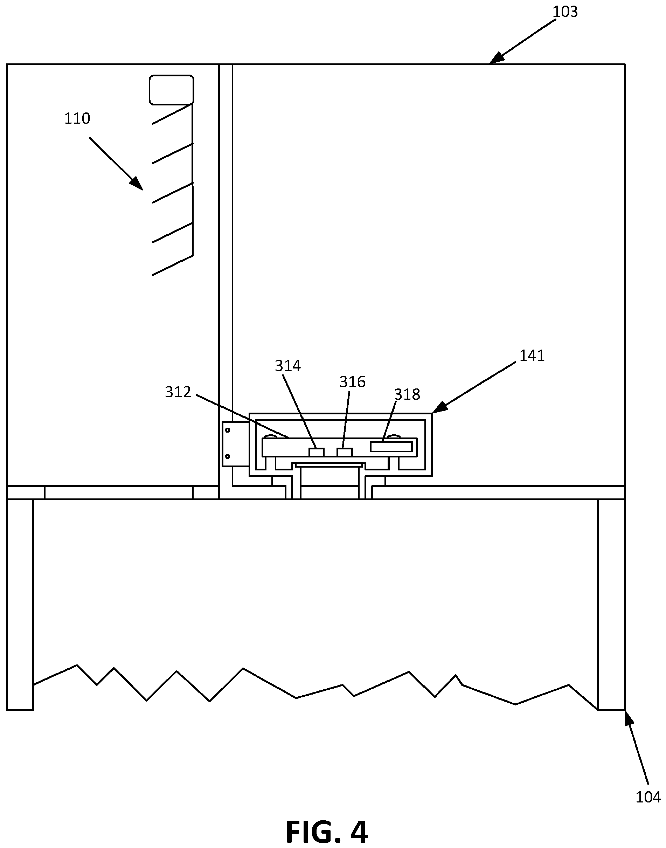

Referring to FIG. 3, in various embodiments, the controller 160 may also comprise input/output (I/O) components to communicate with and/or control the various components of ice maker 103. In certain embodiments, for example, the controller 160 may receive inputs such as, for example, one or more indications, signals, messages, commands, data, and/or any other information, from the water level sensor 136, a harvest sensor 166 for determining when ice has been harvested, an electrical power source (not shown), an ice level sensor 141 for detecting the level of ice in a bin 104 (FIG. 4) below the ice formation device 110, and/or a variety of sensors and/or switches including, but not limited to, pressure transducers, temperature sensors, acoustic sensors, etc. In various embodiments, based on those inputs and predefined control instructions stored in the memory components 164, the controller 160 controls the ice maker 103 by outputting control signals to controllable output components such as the compressor 112, the condenser fan 115, the refrigerant expansion device 118, the hot gas valve 124, the water inlet valve 140, the drain valve 144, and/or the water pump 132. Such control signals may include one or more indications, signals, messages, commands, data, and/or any other information to such components. In the illustrated embodiment, the ice maker 103 (broadly, the refrigeration appliance; or more broadly still, the appliance) comprises a GPS receiver 168 connected to the local controller 160 for providing a GPS location signal to the controller from which a geographic location of the appliance can be determined.

Referring to FIG. 4, in an exemplary embodiment, the ice level sensor 141 is configured to output an ice level signal that continuously varies with the level ice in the storage bin 104 of the ice maker 103. This is in contrast to many conventional ice makers with level detectors that only indicate when ice reaches certain threshold levels (e.g., full, empty). It will be understood that the ice maker 103 can have an integrated storage bin 104, or the storage bin can be a discrete unit positioned below the ice maker 103 to receive ice as it falls from the freeze plate 110. The storage bin 104 can be equipped with or be connected to dispensing mechanisms in one or more embodiments.

In one or more embodiments, the ice level sensor 141 comprises a time-of-flight sensor. In general, a suitable time-of-flight sensor 141 may comprise a sensor board 312 (e.g., a printed circuit board) including a light source 314, a photon detector 316, and an onboard control and measurement processor 318. Exemplary time-of-flight sensor boards are sold by STMicroelectronics, Inc., under the name FlightSense™. Certain non-limiting embodiments of time-of-flight sensors within the scope of this disclosure are described in U.S. Patent Application Publication No. 2017/0351336, which is hereby incorporated by reference in its entirety. Broadly speaking, the light source 314 is configured to emit, at a first time, an optical pulse toward a target. The photon detector 316 is configured to detect, at a second time, a target-reflected photon of the optical pulse signal that returns to the time-of-flight sensor 310. The control and measurement processor 318 is configured to direct the light source to emit the optical pulse and determine a duration (time-of-flight) between the first time and the second time. In one or more embodiments, the control and measurement processor 318 is further configured to determine, based on the determined duration, a distance between the time-of-flight sensor and the target and cause the sensor board 312 to output a signal representative of the determined distance. The time-of-flight sensor 141 is configured to direct the optical pulse from a location adjacent the top of the bin 104 downward toward the bottom of the ice bin. The optical pulse will reflect off of the bottom of the ice bin 30 if no ice is present or, if ice is present, off of the top of the ice received in the bin. Based on the duration (time-of-flight) of the photon(s), the control and measurement processor 318 determines the distance the photon(s) traveled, which indicates the level (broadly, amount or quantity) of ice that is present in the bin 104- e.g., the determined distance is inversely proportional to the quantity of ice in the bin. The time-of-flight sensor 141 can provide a rapid, very accurate indication of level of ice in the bin 104. In certain embodiments, the ice maker controller 160 is configured to receive the measurement signal from the sensor board 312 and to use the measurement signal to control the ice maker. In an exemplary embodiment, the ice maker controller 160 is configured to determine the ice level in the bin 104 based on the signal and to periodically send information about the ice level in the bin to the asset management server 105.

In the illustrated embodiment, the controller 160 has predefined software or circuitry for locally controlling the ice maker 103 in a selected one of the normal mode and the restricted mode. For example, the memory 164 includes registers for each of the modes and the controller 160 controls the ice maker 103 in accordance with pre-programmed instructions for the mode of the currently active register. Alternatively, the asset management server 105 can remotely define and implement secondary modes by issuing change control parameter commands to the ice maker 103 that alter particular control parameters and thereby effectively change the mode of the appliance. In other words, the asset management system 101 enables switching modes even when the ice maker 103 lacks local predefined modes configured into the local control system.

Referring again to FIG. 2, during the normal mode, the controller 160 is generally configured to conduct consecutive ice batch production cycles. Each ice batch production cycle comprises steps of freezing the ice (a freeze step), harvesting the ice (a harvest step), and filling the sump 130 (a fill step). At least some of the ice batch production cycles comprise steps of purging hard water from the sump 130 after a batch of ice is formed and before the sump is refilled (a purge step).

An exemplary embodiment of a normal mode will be briefly described. During the freeze step, the refrigeration system is operated to cool the freeze plate 110. At the same time, the pump 132 circulates water from the sump 130 through the water line 134 and further through the distributor 146. The distributor 146 distributes water along the top portion of the freeze plate 110. As the water flows down the front of the freeze plate 110, some of the water freezes into ice, forming ice pieces on the freeze plate of gradually increasing thickness. The unfrozen water falls off of the freeze plate 110 back into the sump 130.

When the ice reaches a thickness that is suitable for harvesting, the controller 160 switches from the freeze step to the ice harvest step. The pump 132 is turned off and the hot gas valve 124 is opened to redirect hot refrigerant gas to the evaporator 120. The hot gas warms the freeze plate 110, causing the ice to melt. The melting ice falls from the freeze plate into an ice bin (not shown) below. The hot gas valve 124 is closed after the ice has fallen from the freeze plate, as indicated by the harvest sensor 166.

Before beginning another ice batch production cycle, the sump 130 must be refilled. The sump has an end-of-circulation water level that is less than an ice making water level at which the ice maker begins each ice batch production cycle. Thus, before beginning a subsequent freeze step, the controller 160 opens the water inlet valve 140 to let new supply water into the sump 130. The controller 160 closes the water inlet valve 140 when the water level sensor 136 provides an indication to the controller that the water level in the sump 130 reaches the ice making water level.

At least periodically, it is beneficial to purge a portion of the water from the sump 130 before beginning a new ice production cycle. This is advantageous because, during the freeze step, as the water flows down the front of the freeze plate 110, impurities in the water such as calcium and other minerals in solution will remain in solution with the liquid water as purer water freezes. Thus, during each freeze step, the concentration of impurities in the water will increase. Excessive concentrations of impurities can quickly degrade the performance of the ice maker and even render it inoperable. Thus, periodically, the controller 160 will conduct a purge step before the fill step by opening the drain valve 144 to purge a portion of the residual water from the sump 130 from the end-of-circulation water level to a purge threshold water level. The drain valve 144 is one suitable type of purge mechanism but other types of purge mechanisms (e.g., active drain pumps) can also be used to execute the above-described purge step without departing from the scope of the disclosure.

The restricted mode of operation can vary from the normal mode of operation in various ways. In an exemplary embodiment, the restricted mode locks the ice maker 160 to prevent the controller 160 from operating the ice maker 103 to make any ice. For example, the controller 160 may maintain the water inlet valve 140 in the closed position and/or prevent the compressor 112 from operating.

Exemplary embodiments of appliance control systems in the scope of this disclosure are further configured to track time intervals between the performance of required recurrent maintenance tasks. In the case of the illustrated ice maker 103, the recurrent maintenance tasks can comprise one or more of periodic descaling, periodic sanitizing, and periodic air filter cleaning, among others. It will be understood that other appliances can track other types recurrent maintenance tasks, which will vary depending on which maintenance tasks are critical to the functioning or safe operation of the appliance. In one or more embodiments, the ice maker 103 comprises a user interface device 165, and an authorized user can provide an input to the user interface device indicating when a required recurrent maintenance task is performed. In some embodiments, the user must execute the recurrent maintenance task via the controller 160 by making an input to the user interface device 165 to initiate the maintenance task. The controller 160 can receive such an input as an indication that the maintenance task has been performed. In certain embodiments, an authorized user can use a remote device (not shown) connected to the asset management system 101 to indicate that the required recurrent maintenance task has been performed. This may be useful, for example, if the maintenance task is in fact performed, but the maintenance person forgot to make an input to the local user interface device 165 indicating that the task was performed. In response to a local or remote input that the recurrent maintenance task has been performed, the controller 160 can reset a timer that tolls the time since the respective maintenance task was performed.

Referring to FIG. 3, the appliance control system further comprises a network interface 170 configured to connect the appliance 103 to the client-server network 107 for communication with the remote asset management server 105. In other words, the network interface 170 is configured to provide communication between the local controller 160 of the appliance 103 and the remote asset management server 105. An exemplary embodiment of communications architecture for use in an asset management system for appliances is described in greater detail in U.S. Patent No. 9,863,694, which is hereby incorporated by reference in its entirety. The illustrated network interface 170 comprises a wireless transceiver such as a cellular data transceiver or a Wi-Fi transceiver. Other types of network interfaces (e.g., hardwired internet ports, etc.) can also be used without departing from the scope of the disclosure. The network interface 170 is broadly configured to pass operating data from the appliance 103 to the asset management server 105 and pass commands from the asset management server to the appliance.

Various types of operating data and commands can be passed between the appliances 103 and the server 105 within the scope of disclosure, and it will be understood that the specific operating data and commands in any given asset management system 101 will depend on factors such as the types of appliances on the network, the particular control schemes used for controlling the appliances, the operating characteristics of interest to the network, etc.

"Operating parameters" may include, among other things, measured or sensed values indicating one or more aspects of the performance of the appliance 103, as well as values for control settings such as set point values, limit values, etc. In the illustrated embodiment, the controller 160 is configured to periodically send the asset management server 105, via the network interface 170 and the network 107, values measured by the local control system, including: the ice level in the bin 104 detected by the ice level sensor; one or more sensed temperatures (e.g., an air temperature, one or more evaporator temperatures 120 (e.g., the maximum temperature of the refrigerant at the outlet of the evaporator during a freeze step of a previous ice batch production cycle, a temperature of the refrigerant at the outlet of the evaporator at a predefined point in time during a freeze step of a previous ice batch production cycle, a minimum temperature of the refrigerant at the outlet of the evaporator during a freeze step of a previous ice batch production cycle, a maximum temperature of the refrigerant at the outlet of the evaporator during a harvest step of a previous ice batch production cycle), a temperature of the water in the sump 130, and/or a temperature of the supply water at the water inlet), one or more sensed refrigerant pressures (e.g., a sensed refrigerant pressure on the high pressure side of the compressor 112 (e.g., the maximum high side pressure during a freeze step of a previous ice batch production cycle, a high side pressure at a predefined point in time during a freeze step of a previous ice batch production cycle, a minimum high side pressure during a freeze step of a previous ice batch production cycle, a maximum high side pressure during a harvest step of a previous ice batch production cycle) or a sensed pressure of the refrigerant pressure on the low pressure side of the compressor (e.g., the maximum low side pressure during a freeze step of a previous ice batch production cycle, a low side pressure at a predefined point in time during a freeze step of a previous ice batch production cycle, a minimum low side pressure during a freeze step of a previous ice batch production cycle, a maximum low side pressure during a harvest step of a previous ice batch production cycle), a measured run time (e.g., amount of run time in the last day, week, and/or month), a measured water usage (e.g., amount of water consumed in the last day, week, and/or month), a measured energy usage (e.g., amount of energy consumed in the last day, week, and/or month), a measured ice production (e.g., amount of ice produced in the last day, week, and/or month), a measured freeze step duration (e.g., the amount of time taken to conduct the freeze step of the previous completed ice batch production cycle, the amount of time taken to conduct each of the previous predefined number of (e.g., five) freeze cycles, an average of the amount of time taken to conduct each of the previous predefined number of (e.g., five) freeze cycles), a measured harvest step duration (e.g., the amount of time taken to conduct the harvest step of the previous completed ice batch production cycle, the amount of time taken to conduct each of the previous predefined number of (e.g., five) harvest cycles, an average of the amount of time taken to conduct each of the previous predefined number of (e.g., five) harvest cycles). The controller is also configured to periodically send the asset management server 105, via the network interface 170 and the network 107, indications of certain control settings and statuses, including: the current mode setting, the current set point values, and the status of any alarms (e.g., whether any alarm is active to indicate a fault). In the illustrated embodiment, the controller 160 is configured to send the asset management server 160 an indication of the elapsed time since each required recurrent maintenance task (e.g., ice making descaling/sanitizing, and/or air filter cleaning) was last performed. An appliance may "periodically" send or publish operating data to a remote server either at specific intervals or at any time an operating value changes. In certain embodiments, an appliance publishes operating data at specific times, but only publishes parameter values that have changed. In one or more embodiments, an appliance can publish alarm indications immediately and publish all other operating data on a predefined time interval schedule.

The local controller 160 can also receive various commands from the asset management server 105, via the client-server network 107 and the network interface 170. In one or more embodiments, the network interface 170 is configured to pass a "change control parameter command" from the remote asset management server 105 to the controller 160, and in response to receiving the change control parameter command, the controller is configured to change one or more control parameters by which it directs the appliance 103 to perform an appliance function such as making ice. Change control parameter commands can be used to change various types of control parameters within the scope of the disclosure. For example, in one or more embodiments, the change control parameter command can cause the controller 160 to change particular set point or limit control values, e.g., water levels, ice thickness values, temperature set point values, alarm limits, etc. In certain embodiments, the change control parameter command is configured to cause the controller to change a mode of the appliance 103 (e.g., from a normal mode to a restricted mode or vice versa). Hence, in certain embodiments in which the ice maker 103 stores local control settings for a predefined set of modes, the change control parameter command causes the controller 160 to write new values to the registers stored in the memory 109 which set the current mode of the appliance 103. In other embodiments, the change control parameter command can cause the controller 160 to change modes by changing one or more predefined control settings such as set point values or limit values stored in the memory 109.

In one embodiment, each ice maker 103 in the asset management system 101 is configured to periodically transmit ice level data from the ice level sensor 141 to the asset management server 105, and the asset management server is configured to engage in ice level monitoring across the network. In one application of this network-wide ice level monitoring, the asset management server 105 is configured to receive the periodic indications of ice level from each of the ice makers 103 and determine based on the periodic indications that the ice level in one of the bins 104 is low. In response to making this determination, the asset management server 105 is configured to take at least one corrective action selected from a group of corrective actions consisting of: (i) pushing a low ice notification to an operator of the ice maker and/or (ii) making a request for additional ice. As to (i), the asset management server 105 can be configured to push a notification via SMS text messaging to a phone number registered to the ice maker in question, via email to an email address registered to the ice maker in question, or any using other desired push notification method. As to (ii), the asset management server 105 can either use the web API 111 to place A purchase order from an ice vendor or utilize an automated IOT-based peer-to-peer ice market place run on the asset management system as discussed in further detail below.

In one embodiment, the asset management server 105 is configured to make a rule-based determination that the level of ice in the bin 104 of an ice maker 103 in the asset management system 101 is low by comparing the periodic indications of ice level to a predetermined threshold and determining, based on the comparison, that the indicated level of ice is less than the threshold. For example, the threshold level may be a universal metric for all of the ice makers 103 in the asset management system 101 or the threshold level may be set for each individual ice maker 103 by the ice maker operator when the ice maker is registered. As an example, an ice maker operator may provide an indication at registration that he or she wishes to receive a notification any time the level of ice in the ice bin falls below 20% capacity. In this scenario, the asset management server 105 would push a notification to the operator that ice level is low any time the asset management server receives an indication from the ice maker based on the ice level sensor 141 that ice level has fallen below 20%. As another example, at registration time, an ice maker operator may provide an indication that during a user-defined peak business interval (e.g., 5:00 pm to 10:00 pm), any time the ice level falls below a peak business interval minimum ice level threshold (e.g., 35%), the operator would like to have two bags of ice automatically ordered for delivery. In this scenario, the asset management server 105 would place an order via API 111 to a vendor for two bags of ice to be delivered to the location. In some embodiments, the asset management server would also push a notification to the operator notifying him or her of the low ice level and confirming that the order has been placed. Accordingly, it can be seen that the illustrated asset management system 101 enables an ice maker operator to set rules on which the asset management server 105 will take corrective action in response to ice level. The rules can define ice level thresholds at which certain corrective actions can be taken; the rules can define the corrective action to be taken at the given ice level thresholds; and the rules can optionally vary the ice level thresholds and/or corrective actions taken by time interval.

In another embodiment, each ice maker 103 in the asset management system 101 is configured to periodically transmit ice production data (in addition to the ice level data) to the asset management server 105, and the asset management server is further configured to take corrective action based on automated ice level and ice production trend or pattern analysis, e.g., using anomaly detection. In this example, the asset management server 105 is using dynamic trend/pattern analysis of time series data for ice level and ice production to evaluate when ice level at ice maker 103 on the network 107 is low (or high). As explained below, the asset management server 105 uses trend/pattern analysis to determine real ice production capacity and make a robust estimate of expected ice demand and compares these values to assess whether the current ice level is low or high.

In an exemplary embodiment, the ice production data sent periodically by the ice maker 103 to the asset management server 105 includes a record of the duration of at least one of the most resent ice making cycles (e.g., the duration of three or more ice making cycles). From this duration of the ice making cycles, the asset management server 105 can extrapolate the real ice production capacity of the ice maker 103, which may differ from the rated ice production capacity of the ice maker at the time of manufacture. In one embodiment, the asset management server 105 takes a moving average of the ice cycle times and calculates ice capacity according the following equation:

$$\text{Equation 1: } C = B/T$$

where:

C is the real ice production capacity in units of weight-to-time;
B is the known batch weight for the ice maker in units of weight; and
T is the moving average of ice cycle time in units of time.

The ice production data sent periodically by the ice maker to the asset management server can additionally or alternatively include an indication of the amount of run time in a defined time interval and the amount of ice produced over the same time interval. In this case, the asset management server 105 can calculate the effective ice production capacity of the ice maker 103 for the respective time interval according to the following equation.

$$\text{Equation 2: } C' = P/R$$

where:

C' = effective ice production capacity of the ice maker for the time interval in units of weight-to-time;
P = the amount of ice produced during the time interval in units of weight; and
R = the run time during the time interval in units of time.

The asset management server 105 can maintain a time series record of the effective capacity C' for the ice maker and determine the real ice production capacity C of the ice maker as a moving average of the time series.

In one or more embodiments, the asset management server 105 is configured to store in the memory a time series record of both (1) the periodic indications of ice level and (2) the periodic indications of ice production. Using any suitable pattern recognition algorithm (e.g., fast Fourier transform, autocorrelation function, etc.), the asset management server 105 then automatically determines a pattern of statistical "seasonality" to the demand for ice. For example, by comparing the ice level record and ice production record for an ice maker 103 over an extended period (e.g., a month or more), the asset management server 105 can make an hour-by-hour determination (or a determination based on a different time interval) of the average amount that ice demand in a typical week. For any given time interval, the asset management server 105 can calculate demand for ice according to the following equation:

$$\text{Equation 3: } D(t) = L_S - L_E + P$$

where:

D(t) = demand for ice during the time interval in units of weight;
$L_S$ = ice level at the start of the time interval in units of weight;
$L_E$ = ice level at the end of the time interval in units of weight; and
P = the amount of ice produced during the time interval in units of weight.

The asset management server can be configured to store a time series record of the demand D(t) for ice in each time interval of interest and to calculate the "seasonal" demand for ice in the time intervals of interest as a moving average of the respective time series record, which is referred to herein as $D_{avg}(t)$.

Based on the "seasonal" ice demand $D_{avg}(t)$, determined actual ice production capacity C (or a fixed ice production capacity metric for the ice maker), and the current indications of ice level in the bin 104 ('L'), the asset management server 105 can determine, for each of one or more ice makers 103 in the asset management system 101, whether the ice maker can meet an upcoming demand for ice, for example, during a defined upcoming interval, $t_{next}$, having a duration, $T_{next}$, according to the following algorithm: If $L + C^*T_{next} \geq D_{avg}(t_{next})$, then the ice maker is expected to meet demand; If $L + C^*T_{next} < D_{avg}(t_{next})$, then the ice maker is not expected to meet demand. If the ice maker 103 is not expected to meet demand, the asset management system 105 can classify the ice maker as having low ice. If the ice maker 103 has substantially more capacity than is required to meet demand, the ice maker can be classified as having excess ice, e.g., if $L + C^*T_{next} \geq D_{avg}(t_{next}) + E$, where E is an excess amount of ice in units of weight required to consider an ice maker as having a high ice level.

To provide one example, an asset management server 105 may determine based on the production record that an ice maker's real ice production capacity C has fallen from a rated capacity of 100 pounds of ice-per-hour to 45 pounds of ice-per-hour, i.e., 45 lbs/hr. In this example, the asset management server 105 may also determine that on average, the same ice maker 103 has an average demand of ice during a daily interval from 3:00 pm to 11:00 pm of 500 pounds, i.e., $D_{avg}(t_{3-11})$ = 500 lbs; $T_{3-11}$=8 hours. The asset management server 105 can determine based on the real production capacity C that the ice maker 103 will be capable of making 360 pounds of ice toward the demand during the interval from 3:00 pm to 11:00 pm (i.e., the ice maker has an interval production capacity $C^*T_{3-11}$ of 360 pounds). Hence, if at 3:00, the indication of ice level L received by the ice maker is less than 140 pounds of ice in storage, the asset management server 105 can automatically determine that the ice maker 103 does not have capacity to meet expected demand. In response, the server 105 can automatically take corrective action, such as pushing an indication to an operator of the ice maker and/or automatically placing an order for additional ice to the location of the ice maker.

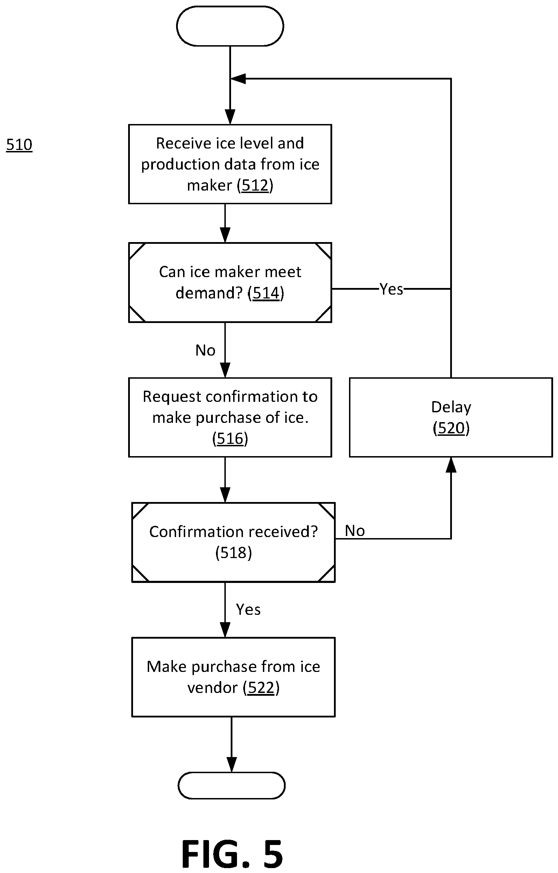

Referring to FIG. 5, an exemplary method of using the asset management system 101 for automated purchasing of ice when ice levels are low is generally indicated at reference number 510. At an initial step 512, the server 105 receives ice level and production data from an ice maker 103. It will be understood that the server 105 can simultaneously run the process 510 for a plurality of ice makers 103 on the network 107. At decision point 514, the server 105 determines based on the ice level and production data from the ice maker 103 (e.g., using the algorithms above) whether the ice maker 103 can meet expected demand for ice. If so, no automated ice purchase is made and the server 105 continues to monitor ice level and production data until a situation arises where it is determined that the ice maker 103 cannot meet the expected demand for ice. When that occurs, at optional step 516, the illustrated asset management server 105 pushes a notification to the operator notifying the operator that there is a low ice level insufficient to meet demand and requesting confirmation that the asset management server 105 should place a purchase order for the amount of ice required to meet demand from the vendor V through the purchasing API 111. At optional decision point 518, the asset management server 105 determines whether the ice maker operator confirms the purchase order. If no purchase order confirmation is provided, the server 105 does not place an order for ice and delays (step 520) until a new demand interval before again monitoring the ice level and production of the ice maker 103. After an operator provides an indication confirming the request to make a purchase order (e.g., via a remote mobile device), at step 522, the server 105 automatically transacts a purchase of ice for delivery from the vendor V. The operators payment credentials stored in server memory 109 are preferably used to make the web-based purchase.

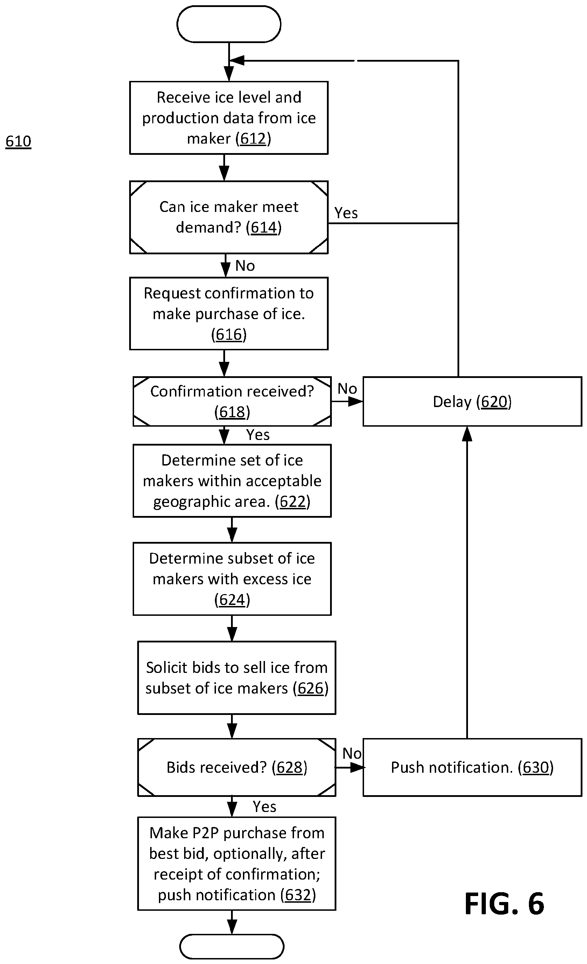

Referring to FIG. 6, another exemplary method of using the asset management system 101 for automated acquisition of ice when ice levels are low is generally indicated at reference number 610. At an initial step 612, the server 105 receives ice level and production data from an ice maker 103. It will be understood that the server 105 can simultaneously run the process 610 for a plurality of ice makers 103 on the network 107. At decision point 614, the server 105 determines based on the ice level and production data from the ice maker 103 (e.g., using the algorithms above) whether the ice maker can meet expected demand for ice. If so, no automated ice acquisition is conducted, and the server 105 continues to monitor ice level and production data until a situation arises where it is determined that the ice maker 103 cannot meet the expected demand for ice. When that occurs, at optional step 616, the illustrated asset management server 105 pushes a notification to the operator notifying the operator that there is a low ice level insufficient to meet demand and requesting confirmation that the asset management server 105 should place a request for the amount of ice required to meet demand through the automated IOT-based peer-to-peer ice marketplace. At optional decision point 618, the asset management server 105 determines whether the ice maker operator confirms the request. If no request confirmation is provided, the server 105 does not place an order for ice and delays (step 620) until a new demand interval before again monitoring the ice level and production of the ice maker 103.

If a confirmation is provided, at step 622, the server 105 determines the set of ice makers 103 that have opted into the automated IOT-based peer-to-peer ice marketplace and that are sufficiently close proximity to the requesting ice maker (broadly, a first ice maker) determined to have a low ice level. In step 622, the set of ice makers can be determined based on the registered locations of the ice makers and a geographic area (e.g., radius around the ice maker) that was defined by the operator of the requesting ice maker at registration time. In step 624, the server 105 determines the subset of subset of ice makers within the acceptable geographic area that have a high ice level in substantial excess of expected demand. For example, the server 105 can set the excess amount variable E (used to determine whether an ice maker as excess capacity in an algorithm above) to be greater than or equal to the shortfall of expected ice capacity in the requesting ice maker.

In the illustrated embodiment, in step 626, the server solicits bids for selling the amount of ice required by the requesting ice maker 103 from each of the subset of ice makers that are (i) in the acceptable geographic area and (ii) have an excess of ice. For example, the server 103 can push a notification to the operator of each of the subset of ice makers with an automated message such as "Your ice maker at XX has excess capacity. A neighbor is short on ice. How much would you charge for XX pounds of ice from your ice maker at XX? Bidding closes at X:XX." The server 105 then waits for bidding to close and then determines at decision point 628 whether any bids were received. If no bids were received, at step 630 the server 105 pushes a notification to the operator of the requesting ice maker that there were no bids to sell ice.

If any bids were received, at step 632 the server selects the best bid, optionally pushes a further notification to the operator of the requesting ice maker to confirm the purchase at the selected bid price, and then automatically conducts a purchase transaction sending money from an electronic payment account associated with the operator of the requesting ice maker (payment account information may be stored in the memory 109 during product registration) to an electronic deposit account associated with the operator with the winning bid (deposit account information may be stored in the memory 109 during product registration). When the purchase transaction is complete, the server also pushes a receipt to the operator of the requesting ice maker.

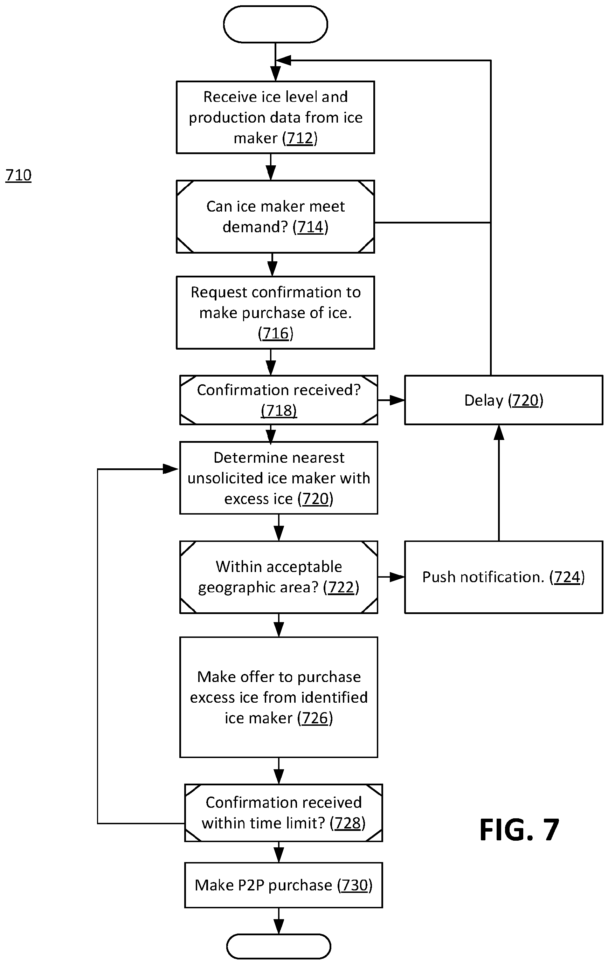

Referring to FIG. 7, another exemplary method of using the asset management system 101 for automated acquisition of ice when ice levels are low is generally indicated at reference number 710. At an initial step 712, the server 105 receives ice level and production data from an ice maker 103. It will be understood that the server 105 can simultaneously run the process 710 for a plurality of ice makers 103 on the network 107. At decision point 714, the server 105 determines based on the ice level and production data from the ice maker 103 (e.g., using the algorithms above) whether the ice maker can meet expected demand for ice. If so, no automated ice acquisition is conducted, and the server 105 continues to monitor ice level and production data until a situation arises where it is determined that the ice maker 103 cannot meet the expected demand for ice. When that occurs, at optional step 716, the illustrated asset management server 105 pushes a notification to the operator notifying the operator that there is a low ice level insufficient to meet demand and requesting confirmation that the asset management server 105 should place a request for the amount of ice required to meet demand through the automated IOT-based peer-to-peer ice marketplace. At optional decision point 718, the asset management server 105 determines whether the ice maker operator confirms the request. If no request confirmation is provided, the server 105 does not place an order for ice and delays (step 720) until a new demand interval before again monitoring the ice level and production of the ice maker 103.

If a confirmation is provided, at step 722, the asset management server determines, based on the ice maker locations stored in the memory 109 and ice level and ice production capacity data for the other ice makers 103 on the network 107, which of the other ice makers that (i) has not yet been solicited to sell ice and (ii) has an excess of ice capacity is located closest to the requesting ice maker. At decision point 722, the server 105 determines whether the ice maker 103 identified in step 720 is located within the acceptable geographic area for the requesting ice maker. If not, at step 724 the server 105 pushes a notification to the operator of the requesting ice maker indicating that no ice is available for purchase on the through the automated IOT-based peer-to-peer ice marketplace. But if there is a suitable ice maker identified by step 720 and decision point 722, the server 105 makes request for ice from the identified ice maker in step 726. More particularly, the server 105 pushes a notification to the operator of the identified ice maker requesting ice for the requesting operator. It is contemplated that this can be an offer to purchase the ice as shown in the drawing or it could also be a friendly request to share ice at no cost. The server 105 waits for a defined interval of time to receive confirmation from the operator of the identified ice maker. If at decision point 728, confirmation is received, the server 105 automatically conducts a transaction, e.g., a purchase transaction sending money from an electronic payment account associated with the operator of the requesting ice maker (payment account information may be stored in the memory 109 during product registration) to an electronic deposit account associated with the operator who accepted the purchase order (deposit account information may be stored in the memory 109 during product registration). If the request is accepted without payment, the transaction could involve the transfer of reward points or other nonmonetary compensation to the accepting operator. When the purchase transaction is complete, the server also pushes a receipt to the operator of the requesting ice maker. If the operator of the identified ice maker does not accept the purchase order within the defined time interval (i.e., the answer to decision point 728 is NO), the server repeats step 720 but now excludes the ice maker that did not respond to solicitation from consideration. The sequence of steps and decision points 720, 722, 726, 728 repeats until either no acceptable ice maker is identified at decision point 722 or an operator accepts a purchase order at decision point 728.

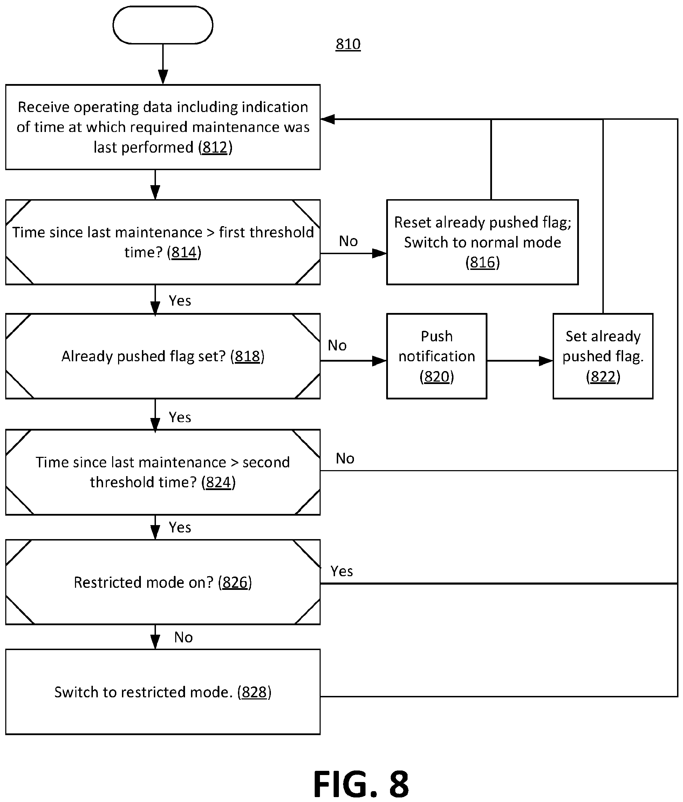

Referring to FIG. 8, the asset management server 105 may also be configured execute a method 810 of ensuring compliance with required appliance maintenance. Ice makers are known disease vectors when they are not properly cleaned (e.g., sanitized) on a periodic basis. The asset management server 105 is configured to promote compliance with required maintenance schedules for recurrent maintenance tasks such as cleaning operations. In one example, the recurrent maintenance task in question is cleaning of an ice maker 103. In another example, the recurrent maintenance task is replacement of an expendable part of an appliance (e.g., an air filter of an ice maker). It is contemplated that the method 810 depicted in FIG. 8 can be used for asset management systems for other types of appliances besides ice makers. In one specification example, the method 810 of FIG. 8 is used for an ozone sanitizing device of the type described in 17/244,553. One exemplary recurrent maintenance task that can be monitored using the method 810 is replacement of catalyst for such a sanitizing device. In another example, the recurrent maintenance task is replacement of filter media in a water filtration appliance.

During operation, an appliance 103 periodically sends operating data to the asset management server 105 via the client-server network 107. In step 812 of the method 810, the server 105 receives the operating data. Based on the operating data received in step 812, the server 105 determines how long it has been since the recurrent maintenance task has been completed. The server memory 109 may store one or more threshold time intervals at which the server is configured to take certain actions to ensure that the necessary recurrent maintenance operations are being performed. In the illustrated embodiment, the server memory 109 stores a first time threshold at which the server 105 pushes a notification to the operator that the maintenance must be performed and a second time threshold at which the server automatically switches the appliance from a normal mode of operation to a restricted mode (e.g., a restricted mode in which the appliance is locked from performing one or more of its appliance functions). U.S. Provisional Patent Application No. 63/144,781 is hereby incorporated by reference into the present application. It describes one exemplary type of restricted mode, referred to therein as a "locked mode," which may be utilized for a restricted mode of operation in accordance with the present disclosure.

At decision point 814, the server 105 determines based on the operating data sent by the appliance 103 whether the elapsed time since the recurrent maintenance task was last performed exceeds a first threshold time interval. If not, at step 816, the server 105 resets an "already pushed" flag (discussed below) in memory 109, if the flag has not already been reset. In step 816, the illustrated server also switches the appliance to the normal operating mode if it is currently operating in a restricted mode. If in decision point 814 the server 105 determines that the elapsed time exceeds the first threshold time, at decision point 818, the server determines whether the "already pushed" flag is already set for the appliance 103 in server memory 109. If the flag has not been set, at step 820, the server 105 pushes a notification to the operator of the appliance that the maintenance task urgently needs to be performed. In the illustrated embodiment, the server 105 might also include an indication of the time at which use of the appliance will become restricted in the push notification. After pushing the notification in step 820, at step 822, the server 105 sets the already pushed flag in memory 109 to indicate that a reminder message has already been pushed to the operator.

FIG. 8 depicts a method 810 in which the server 105 pushes only one reminder notification to the operator before proceeding to restrict access at the appropriate time. It will be understood, however, that the server can be configured to push a series of two or more reminders at different times before restricting access. Further, the method depicted in FIG. 8 can be adapted to only push maintenance reminder notifications to the operator and never restrict access to the appliance if that is desired.

If in decision point 818 the "already pushed" flag is determined to have already been set, the server 105 executes decision point 824 to determine whether the elapsed time since the recurrent maintenance task was last performed exceeds a second time threshold. If not, the server 105 repeats the previous steps of the method 810 until the operating data from the appliance 103 indicates either that the elapsed time (i) decreases to less than the first time threshold (at which point, the server executes step 816 to reset the "already pushed" flag) or (ii) increases to greater than the second threshold. Once the elapsed time is determined to exceed the second threshold in decision point 824, the server proceeds to decision point 826 to determine whether the appliance has already been switched to the restricted mode. If not, the server 105 switches the appliance 103 to the restricted mode and repeats the previous steps of the method 810 until the operating data from the appliance 103 indicates that the elapsed time has decreased to less than the first time threshold, at which point, the server 105 executes step 816 to reset the "already pushed" flag in the memory 109 and switches the appliance 103 back the normal mode of operation.

As explained above, the present disclosure is not limited to asset management systems for ice makers. Other types of refrigeration appliances, cooking appliances, cleaning appliances, and water-using appliances may be controlled and monitored on a geographic basis using the methods and systems described above. Certain embodiments of medical freezers and self-contained commercial refrigerators are described in the attached Appendix. In particular, the attached appendix describes embodiments of operating data that these appliances may publish periodically to an asset management server.

As will be appreciated by one skilled in the art, aspects of the embodiments disclosed herein may be embodied as a system, method, computer program product or any combination thereof. Accordingly, embodiments of the disclosure may take the form of an entire hardware embodiment, an entire software embodiment (including firmware, resident software, micro-code, etc.) or an embodiment combining software and hardware aspects that may all generally be referred to herein as a "circuit," "module" or "system." Furthermore, aspects of the disclosure may take the form of a computer program product embodied in any tangible medium having computer usable program code embodied in the medium.

Aspects of the disclosure maybe described in the general context of computer-executable or processor-executable instructions, such as program modules, being executed by a computer or processor. Generally, program modules include routines, programs, objects, components, data structures, etc. that perform particular tasks or implement particular abstract data types. Aspects of the disclosure may also be practiced in distributed computing environments where tasks are performed by remote processing devices that are linked through a communications network. In a distributed computing environment, program modules may be located in both local and remote computer storage media including memory storage devices.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain or store the program for use by or in connection with the instruction execution system, apparatus, or device.

Computer program code for carrying out operations of the present disclosure may be written in any combination of one or more programming languages, including, but not limited to, an object oriented programming language such as Java, Smalltalk, C++, C# or the like and conventional procedural programming languages, such as the "C" programming language or similar programming languages. The program code may execute entirely on the portable electronic device, partly on the portable electronic device or refrigeration appliance, as a stand-alone software package, partly on the portable electronic device and partly on a remote computer, or entirely on a remote computer or server. In the latter scenario, the remote computer may be connected to the portable electronic device through any type of network, including a local area network (LAN) or a wide area network (WAN), or the connection may be made to an external computer (for example, through the Internet using an Internet Service Provider).

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products and methods without departing from the scope of the invention, it is intended that all matter contained in the above description shall be interpreted as illustrative and not in a limiting sense.

## Aspects of the Invention

1. A method of remotely managing an appliance, the method comprising:

receiving operating data from the appliance;
determining based on the operating data an interval of elapsed time since a recurrent maintenance task was performed;
recognizing at an asset management server remote from the appliance that the interval of elapsed time exceeds a threshold time interval; and
in response to recognizing that the interval of time exceeds the threshold time interval, one of: (i) pushing a notification to an operator of the appliance indicating that the recurrent maintenance task should be performed and (ii) sending a command from the asset management server to the appliance over the client-server network, the command being configured to cause a controller of the appliance to switch from a normal mode to a restricted mode.

2. The method of aspect 1, wherein the threshold time interval is a first threshold time interval and wherein in response to recognizing that the interval of elapsed time exceeds the first threshold time interval, by the asset management server, pushing the notification to the operator.

3. The method of aspect 2, further comprising recognizing at the asset management server that the interval of elapsed time exceeds a second threshold time interval.

4. The method of aspect 3, further comprising in response to recognizing that the interval of time exceeds the second threshold time interval, by the asset management server, sending the command from the asset management server to the appliance to cause the controller to switch from the normal mode to the restricted mode.

5. The method of aspect 4, further comprising in response to recognizing that the interval of elapsed time exceeds the second threshold time interval, by the asset management server, pushing a notification to the operator that use of the appliance is restricted until the recurrent maintenance task is performed.

6. The method of aspect 1, wherein in response to recognizing that the interval of elapsed time exceeds the threshold time interval, the asset management server sends a command from the asset management server to the appliance over the client-server network, the command being configured to cause a controller of the appliance to switch from a normal mode to a restricted mode; and wherein the method further comprises, after sending the command, receiving by the asset management server an indication from the appliance over the client-server network that the recurrent maintenance task has been performed.

7. The method of aspect 6, further comprising sending by the asset management server another command to the appliance to cause the appliance to switch from the restricted mode to the normal mode.

8. A method of managing an ice maker, the method comprising:

receiving periodic indications of a level of ice in a bin associated with the ice maker from an ice level sensor of the ice maker;
determining based on the periodic indications that the level of ice in the bin is low; and
in response to said determining, taking at least one corrective action selected from the group of corrective actions consisting of (i) pushing a low ice notification to an operator of the ice maker and (ii) placing an order for additional ice.

9. The method of aspect 8, further comprising comparing each indication of the level of ice in the bin to a threshold and said determining that the level of ice in the bin is low determining based on the indication that the level of ice in the bin is less than the threshold.

10. The method of aspect 8, further comprising storing in memory a record of the periodic indications and determining based on the record a seasonal demand for ice.

11. The method of aspect 10, further comprising assessing whether the ice maker can meet demand for ice during an upcoming demand interval based on the determined seasonal demand for ice.

12. The method of aspect 11, further comprising receiving periodic ice production data from the ice maker; determining based on the periodic ice production data a true production capacity of the ice maker; and wherein said assessing is also based on the determined true production capacity of the ice maker.

13. A method of remotely managing a plurality of ice makers in an asset management system, the method comprising:

receiving at an asset management server ice level data from the plurality of ice makers;
determining by the asset management server based on the ice level data that a first of the plurality of ice makers has a low ice level and a second of the plurality of ice makers has high ice level; and
in response to said determining, facilitating by the asset management server a web based transaction by which the operator of the first ice maker acquires ice from the operator of the second ice maker.

14. The method as set forth in aspect 13, wherein said facilitating comprises pushing a notification to the operator of the first ice maker indicating the low ice level.

15. The method as set forth in aspect 13, wherein said facilitating comprises requesting by the asset management server confirmation from the operator of the first ice maker to make an offer to purchase ice from the operator of the second ice maker.

16. The method as set forth in aspect 13, wherein said facilitating comprises pushing a notification to the operator of the second ice maker indicating the high ice level.

17. The method as set forth in aspect 13, wherein said facilitating comprises requesting by the asset management server confirmation from the operator of the second ice maker to accept an offer to purchase ice made by the operator of the first ice maker.

18. The method as set forth in aspect 13, wherein said determining comprises: making a first determination by the asset management server that the first of the plurality of ice makers has a low ice level;

then making a second determination by the asset management server that a set of the plurality of ice makers is located in an acceptable geographic area in relation to the first ice maker; and then making a third determination by the asset management server that each of a subset of the set of ice makers has a high ice level, the subset including the second ice maker.

19. The method as set forth in aspect 18, wherein said determining further comprises pushing requests for bids for selling ice to the operator of the first ice maker to the operators of each of the subset of ice makers.

20. The method as set forth in aspect 19, wherein said determining further comprises selecting a bid from the operator of the second ice maker.

21. The method as set forth in aspect 13, wherein said determining comprises:

making a first determination by the asset management server that the first of the plurality of ice makers has a low ice level; then making a second determination by the asset management server that the second ice maker is a nearest unsolicited ice maker of the plurality of ice makers with excess ice.

22. The method as set forth in aspect 13, further comprising determining that the second ice maker is in an acceptable geographic area in relation to the first ice maker.

**Claims**

1. A method of remotely managing an appliance, the method comprising:

receiving operating data from the appliance; determining based on the operating data an interval of elapsed time since a recurrent maintenance task was performed; recognizing at an asset management server remote from the appliance that the interval of elapsed time exceeds a threshold time interval; and in response to recognizing that the interval of time exceeds the threshold time interval, one of: (i) pushing a notification to an operator of the appliance indicating that the recurrent maintenance task should be performed and (ii) sending a command from the asset management server to the appliance over the client-server network, the command being configured to cause a controller of the appliance to switch from a normal mode to a restricted mode.

2. The method of claim 1, wherein the threshold time interval is a first threshold time interval and wherein in response to recognizing that the interval of elapsed time exceeds the first threshold time interval, by the asset management server, pushing the notification to the operator.

3. The method of claim 2, further comprising recognizing at the asset management server that the interval of elapsed time exceeds a second threshold time interval, optionally:
further comprising in response to recognizing that the interval of time exceeds the second threshold time interval, by the asset management server, sending the command from the asset management server to the appliance to cause the controller to switch from the normal mode to the restricted mode, and further optionally:

further comprising in response to recognizing that the interval of elapsed time exceeds the second threshold time interval, by the asset management server, pushing a notification to the operator that use of the appliance is restricted until the recurrent maintenance task is performed.

4. The method of claim 1, wherein in response to recognizing that the interval of elapsed time exceeds the threshold time interval, the asset management server sends a command from the asset management server to the appliance over the client-server network, the command being configured to cause a controller of the appliance to switch from a normal mode to a restricted mode; and wherein the method further comprises, after sending the command, receiving by the asset management server an indication from the appliance over the client-server network that the recurrent maintenance task has been performed, optionally:
further comprising sending by the asset management server another command to the appliance to cause the appliance to switch from the restricted mode to the normal mode.

5. A method of managing an ice maker, the method comprising:

receiving periodic indications of a level of ice in a bin associated with the ice maker from an ice level sensor of the ice maker; determining based on the periodic indications that the level of ice in the bin is low; and in response to said determining, taking at least one corrective action selected from the group of corrective actions consisting of (i) pushing a low ice notification to an operator of the ice maker and (ii) placing an order for additional ice.

**6.** The method of claim 5, further comprising comparing each indication of the level of ice in the bin to a threshold and said determining that the level of ice in the bin is low determining based on the indication that the level of ice in the bin is less than the threshold.

**7.** The method of claim 5, further comprising storing in memory a record of the periodic indications and determining based on the record a seasonal demand for ice, optionally:
further comprising assessing whether the ice maker can meet demand for ice during an upcoming demand interval based on the determined seasonal demand for ice, and further optionally:

> further comprising receiving periodic ice production data from the ice maker;
> determining based on the periodic ice production data a true production capacity of the ice maker; and wherein said assessing is also based on the determined true production capacity of the ice maker.

**8.** A method of remotely managing a plurality of ice makers in an asset management system, the method comprising:

> receiving at an asset management server ice level data from the plurality of ice makers;
> determining by the asset management server based on the ice level data that a first of the plurality of ice makers has a low ice level and a second of the plurality of ice makers has high ice level; and
> in response to said determining, facilitating by the asset management server a web based transaction by which the operator of the first ice maker acquires ice from the operator of the second ice maker.

**9.** The method as set forth in claim 8, wherein said facilitating comprises:

> i) pushing a notification to the operator of the first ice maker indicating the low ice level; or
> ii) requesting by the asset management server confirmation from the operator of the first ice maker to make an offer to purchase ice from the operator of the second ice maker; or
> iii) pushing a notification to the operator of the second ice maker indicating the high ice level.

**10.** The method as set forth in claim 8, wherein said facilitating comprises requesting by the asset management server confirmation from the operator of the second ice maker to accept an offer to purchase ice made by the operator of the first ice maker.

**11.** The method as set forth in claim 8, wherein said determining comprises:

> making a first determination by the asset management server that the first of the plurality of ice makers has a low ice level;
> then making a second determination by the asset management server that a set of the plurality of ice makers is located in an acceptable geographic area in relation to the first ice maker; and
> then making a third determination by the asset management server that each of a subset of the set of ice makers has a high ice level, the subset including the second ice maker.

**12.** The method as set forth in claim 12, wherein said determining further comprises pushing requests for bids for selling ice to the operator of the first ice maker to the operators of each of the subset of ice makers, optionally:
wherein said determining further comprises selecting a bid from the operator of the second ice maker.

**13.** The method as set forth in claim 8, wherein said determining comprises:

> making a first determination by the asset management server that the first of the plurality of ice makers has a low ice level;
> then making a second determination by the asset management server that the second ice maker is a nearest unsolicited ice maker of the plurality of ice makers with excess ice.

**14.** The method as set forth in claim 8, further comprising determining that the second ice maker is in an acceptable geographic area in relation to the first ice maker.

101

V

111

105

109

107

103

104

103

104

103

103

104

103

104

# FIG. 1

**FIG. 2**

**FIG. 3**

**FIG. 4**

510

Receive ice level and
production data from ice
maker (512)

Can ice maker meet
demand? (514) —————Yes—————

No

Request confirmation to
make purchase of ice.
(516)

Delay
(520)

Confirmation received?
(518) —————No—————

Yes

Make purchase from ice
vendor (522)

# FIG. 5

```
┌─────────────────────┐
│      (  start  )     │
└─────────────────────┘
           │
           │◄──────────────────────────────────┐
           ▼                                    │
┌─────────────────────┐                         │
│  Receive ice level  │                         │
│  and production     │                         │
│  data from ice      │                         │
│  maker (612)        │                         │
└─────────────────────┘                         │
           │                                    │
           ▼                                    │
┌─────────────────────┐  Yes                    │
│  Can ice maker meet ├─────────────────────────┤
│  demand? (614)      │                         │
└─────────────────────┘                         │
           │ No                                 │
           ▼                                    │
┌─────────────────────┐                         │
│ Request confirmation│                         │
│ to make purchase    │                         │
│ of ice. (616)       │                         │
└─────────────────────┘                         │
           │                                    │
           ▼                                    │
┌─────────────────────┐  No   ┌──────────────┐  │
│ Confirmation        ├──────►│  Delay (620) │  │
│ received? (618)     │       └──────────────┘  │
└─────────────────────┘             ▲           │
           │ Yes                    │           │
           ▼                        │           │
┌─────────────────────┐            │           │
│ Determine set of    │            │           │
│ ice makers within   │            │           │
│ acceptable          │            │           │
│ geographic area.    │            │           │
│ (622)               │            │           │
└─────────────────────┘            │           │
           │                       │           │
           ▼                       │           │
┌─────────────────────┐            │           │
│ Determine subset of │            │           │
│ ice makers with     │            │           │
│ excess ice (624)    │            │           │
└─────────────────────┘            │           │
           │                       │           │
           ▼                       │           │
┌─────────────────────┐            │           │
│ Solicit bids to     │            │           │
│ sell ice from       │            │           │
│ subset of ice       │            │           │
│ makers (626)        │            │           │
└─────────────────────┘            │           │
           │                       │           │
           ▼                       │           │
┌─────────────────────┐  No   ┌──────────────┐ │
│ Bids received?(628) ├──────►│ Push         ├─┘
└─────────────────────┘       │ notification.│
           │ Yes              │ (630)        │
           ▼                  └──────────────┘
┌─────────────────────┐
│ Make P2P purchase   │
│ from best bid,      │
│ optionally, after   │
│ receipt of          │
│ confirmation;       │
│ push notification   │
│ (632)               │
└─────────────────────┘
           │
           ▼
      (    end    )
```

610

# FIG. 6

710

Receive ice level and production data from ice maker (712)

Can ice maker meet demand? (714)

Request confirmation to make purchase of ice. (716)

Confirmation received? (718) → Delay (720)

Determine nearest unsolicited ice maker with excess ice (720)

Within acceptable geographic area? (722) → Push notification. (724)

Make offer to purchase excess ice from identified ice maker (726)

Confirmation received within time limit? (728)

Make P2P purchase (730)

**FIG. 7**

810

Receive operating data including indication of time at which required maintenance was last performed (812)

Time since last maintenance > first threshold time? (814)

No → Reset already pushed flag; Switch to normal mode (816)

Yes

Already pushed flag set? (818)

No → Push notification (820) → Set already pushed flag. (822)

Yes

Time since last maintenance > second threshold time? (824)

No

Yes

Restricted mode on? (826)

Yes

No

Switch to restricted mode. (828)

**FIG. 8**

Europäisches
Patentamt

European
Patent Office

Office européen
des brevets

## EUROPEAN SEARCH REPORT

Application Number

EP 23 15 9689

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 343 751 B2 (KATES LAWRENCE [US]) 18 March 2008 (2008-03-18) * abstract; figures 1-17 * | 1-4 | INV. F25C5/187 F25B49/00 F25D29/00 H04L12/28 |
| X | US 2006/143520 A1 (MATSUSHIMA HIROAKI [JP] ET AL) 29 June 2006 (2006-06-29) * abstract; figures 1-11 * * paragraph [0044] * | 1,2 | |
| X | DE 10 2016 014311 A1 (LIEBHERR HAUSGERAETE OCHSENHAUSEN GMBH [DE]) 7 June 2018 (2018-06-07) * abstract * * paragraph [0030] * | 5-7 | |
| A | US 2006/248903 A1 (HEALD TIMOTHY [US] ET AL) 9 November 2006 (2006-11-09) * abstract; figures 1-13 * | 5-14 | |

TECHNICAL FIELDS SEARCHED (IPC)

F25B
F25C
F25D
H04L

The present search report has been drawn up for all claims

| Place of search | Date of completion of the search | Examiner |
|---|---|---|
| The Hague | 25 June 2023 | Yousufi, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9689

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2023

| Patent document cited in search report | | Publication date | Patent family member(s) | | Publication date |
|---|---|---|---|---|---|
| US 7343751 | B2 | 18-03-2008 | US | 2006032245 A1 | 16-02-2006 |
| | | | US | 2006032246 A1 | 16-02-2006 |
| | | | US | 2006032247 A1 | 16-02-2006 |
| | | | US | 2006032248 A1 | 16-02-2006 |
| | | | US | 2006032379 A1 | 16-02-2006 |
| | | | US | 2006196196 A1 | 07-09-2006 |
| | | | US | 2006196197 A1 | 07-09-2006 |
| | | | US | 2008015797 A1 | 17-01-2008 |
| | | | US | 2008016888 A1 | 24-01-2008 |
| | | | US | 2008216495 A1 | 11-09-2008 |
| | | | US | 2008223051 A1 | 18-09-2008 |
| | | | US | 2012260804 A1 | 18-10-2012 |
| | | | US | 2013287063 A1 | 31-10-2013 |
| | | | US | 2014000290 A1 | 02-01-2014 |
| | | | US | 2014000291 A1 | 02-01-2014 |
| | | | US | 2014000292 A1 | 02-01-2014 |
| | | | US | 2014000293 A1 | 02-01-2014 |
| | | | US | 2014000294 A1 | 02-01-2014 |
| | | | US | 2014012422 A1 | 09-01-2014 |
| | | | US | 2015261230 A1 | 17-09-2015 |
| | | | US | 2018129233 A1 | 10-05-2018 |
| | | | US | 2020285258 A1 | 10-09-2020 |
| US 2006143520 | A1 | 29-06-2006 | CN | 1424843 A | 18-06-2003 |
| | | | JP | 2003172578 A | 20-06-2003 |
| | | | KR | 20030047795 A | 18-06-2003 |
| | | | US | 2003120972 A1 | 26-06-2003 |
| | | | US | 2006143520 A1 | 29-06-2006 |
| DE 102016014311 | A1 | 07-06-2018 | NONE | | |
| US 2006248903 | A1 | 09-11-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 14796521
- US 20160054043
- US 20170351336
- US 9863694 B
- US 63144781